# EUROPEAN PATENT APPLICATION

(11) **EP 4 489 264 A1**
(43) Date of publication of application: **08.01.2025**
(21) Application number: 23183759.2
(22) Date of filing: 06.07.2023
(51) Int. Cl.: H02K 1/20, H02K 7/18, H02K 9/04, H02K 3/24

(54) **GENERATOR COOLING FLUID SEPARATION**

(71) Applicant: Siemens Gamesa Renewable Energy A/S, 7330 Brande (DK)
(72) Inventor: Hansen, Henrik, 6000 Kolding (DK); Steffensen, Michael Bilet Skovgaard, 8722 Hedensted (DK)
(74) Representative: SGRE-Association

(57) **Abstract**

The present invention relates to a stator (100) for a wind turbine generator (150). The stator (100) comprises a stator segment (110) having cooling openings (111) for guiding air (101) through the stator segment (110) along a radial direction (152) of the wind turbine generator (150), and an air collecting cap (102) arranged at a radially inner surface of the stator segment (110), wherein the air collecting cap (102) forms an air collecting volume (Vc) for collecting air (101) streaming though the cooling openings (111). The stator (100) further comprises an air guiding channel (103), wherein the air guiding channel (103) is coupled to the air collecting cap (102) for guiding air (101) from the air collecting volume (Vc) through an air opening (105) into the air guiding channel (103). The air guiding channel (103) is configured for guiding the collected air (101) outside of the stator segment (110).

## Description

### Field of Invention

The present invention relates to a stator for a wind turbine generator having an air collecting cap and to a method for manufacturing a respective stator for a wind turbine generator. Furthermore, the wind turbine generator comprising a respective air collecting cap is described.

### Art Background

In wind turbines, wind turbine generators are installed on top in a nacelle of the wind turbine. Specifically, direct drive wind turbines are common, which have generator comprising an outer rotor rotating around an inner stator. The rotor is coupled to a hub to which the wind turbine blades are attached. The rotor and the stator have large diameters, so that no gears between the hub and the rotor are necessary. Thus, e.g. the stator is made of a plurality of stator segments forming the large diameter stator.

The energy generation by the wind turbine generators causes high temperatures so that the heated parts of the rotor and stator have to be flushed with cooling air. Current solutions are based on separating the hot and cold air streams by creating a separator plates between two areas in the stator which can then act as a hot and cold rooms for the respective air flows. However, the airs streams are not canalized so that streaming loss of the cooled or heated air is given.

### Summary of the invention

There may be a need to provide a more efficient air guidance for cooling air in a wind turbine generator.

This need may be met by a stator for a wind turbine generator having an air collecting cap and to a method for manufacturing a respective stator for a wind turbine generator according to the independent claims.

According to a first aspect of the invention, a stator for a wind turbine generator is described. The stator comprises a stator segment having cooling openings for guiding air through the stator segment along a radial direction of the wind turbine generator. The stator further comprises an air collecting cap arranged at a radially inner surface of the stator segment, wherein the air collecting cap forms an air collecting volume for collecting air streaming though the cooling openings. The stator further comprises an air guiding channel, wherein the air guiding channel is coupled to the air collecting cap for guiding air from the air collecting volume through an air opening into the air guiding channel, wherein the air guiding channel is configured for guiding the collected air outside of the stator segment.

According to a further aspect of the invention a wind turbine generator is presented, comprising an above-described stator and a rotor being rotatable with respect to the stator. Between the stator and the rotor air is injectable wherein the air is guidable through the cooling openings of the stator segment through the stator segment along a radial direction.

According to a further aspect of the invention, a method for manufacturing a stator for a wind turbine generator is described. According to the method a stator segment is provided having cooling openings for guiding air through the stator segment along a radial direction of the wind turbine generator. The method further comprises arranging an air collecting cap at a radially inner surface of the stator segment, wherein the air collecting cap forms an air collecting volume for collecting air streaming though the cooling openings. The method further comprises coupling an air guiding channel to the air collecting cap for guiding air from the air collecting volume through an air opening into the air guiding channel, wherein the air guiding channel is configured for guiding the collected air outside of the stator segment.

The term "stator" may particularly denote the immovable part of the electric wind turbine generator. A stator has an annular or cylindrical structure comprising for example magnetic elements and/or coil elements for generating electricity. The stator comprises of a plurality of stator segments that are arranged with respect to each other along the circumferential direction around the rotating axis. The wind turbine generator comprises an axis of rotation of the rotor and a respective rotating shaft to which the rotor is coupled. The wind turbine generator may be designed with an external rotor rotating around an inner stator.

In the context of the present document, the term "axial direction" may particularly denote a direction (substantially) parallel to the direction of the axis of rotation of the rotor and the rotating shaft, respectively, of the wind turbine. The radial direction is orthogonal to the axis of rotation and hence the axial direction. The circumferential direction describes the direction around the axis of rotation and is perpendicular to the axial direction and the circumferential direction.

The stator comprises as described above the stator segments. A stator segment comprises respective cooling openings for guiding air from one side of the stator segment to the other side. Specifically, cooling air may be guided through a gap between the stator and the rotor for cooling the respective components of the stator. The air is then guided out of the gap through the cooling openings on a stator segment. The stator segment may comprise a plurality of cooling opening which can be arranged in predefined pattern. The cooling opening may form holes or slits.

According to the present invention, an air collecting cap is provided which is mounted to a surface of the stator segment, which surface is opposite to the surface facing the rotor, e.g. to the radial inner surface of the stator segment. The air collecting cap forms a collecting volume between the surface of the stator segment and the air collecting cap itself. The air collecting cap covers a larger inner surface of the stator segment for covering a plurality of cooling openings. At the side surface or at the bottom surface spaced apart from the inner surface of the stator segment, the air opening for providing a fluid connection to the air guiding channel is formed. Hence, air streaming through a plurality of cooling openings is collected in the air collecting volume before flowing out of the stator segment via the air guiding channel.

To the air collecting cap, the air guiding channel is coupled. An air opening is formed between the air guiding channel and the air collecting cap. The air opening may be formed by a hole, a plurality of holes and pattern of holes, respectively or by one or a plurality of connecting slits forming a respective connection between the inner air collecting volume and the air guiding channel. The air guiding channel extends specifically at least one direction component along the axial direction in order to guide the air of the stator segment. The air guiding channel may be coupled to one or a plurality of air collecting caps. Specifically, a ventilator, coupled to or installed in the air guiding channel to transport the air by blowing or sucking from the air guiding channel outside of the stator segment. The air guiding channel may be formed of metal sheet or plastic material.

Hence, the air streaming though the cooling openings is collected within the collecting volume. Thus, the cooling air does not longer flow unguided within the inner side of the stator but is selectively gathered in the collecting volume. As described in the following, the air is canalized and can be guided in a controlled and efficient manner.

According to a further exemplary embodiment,a ventilator is arranged in the air guiding channel for guiding the collected air outside of the stator. The ventilator may be installed in air guiding channel in an upstream direction of the air in the air guiding channel upstream of the air opening, such that the ventilator blows the air along the air guiding channel. Alternatively, the ventilator may be arranged below the air opening or downstream of the air stream through the air guiding channel to suck the air from the collecting volume to the air guiding channel.

According to a further exemplary embodiment, the ventilator is arranged at the air opening inside the air guiding channel, wherein the ventilator is in particular a radial ventilator. Hence, the ventilator sucks specifically the air along a radial direction through the air opening into the air guiding channel and blows the air further along the air guiding channel.

According to a further exemplary embodiment, the air guiding channel is coupled radially inwards to the air collecting cap such that the air opening is configured for guiding air radially from the air collecting volume to the air guiding channel. Hence, the air opening for providing a fluid connection to the air guiding channel is formed at the radial inner bottom surface of the air collecting cap spaced apart from the inner surface of the stator segment. Hence, air streaming through a plurality of cooling openings is collected in the air collecting volume before flowing out of the stator segment via the air guiding channel.

According to a further exemplary embodiment, the air collecting cap comprises plastic material, in particular fibre reinforced plastic material. Since the air streaming through the cooling openings has a moderate temperature and because the air collecting caps do not transfer any forces of the stator segment regarding stability, the air collecting caps may be formed in a lightweight manner. Hence, plastic materials can be used. In order to provide more robustness, fiber reinforced plastic materials can be used. Hence, the air collecting cap may be formed in an injection molding process, for example.

The air collecting cap may be formed also with plastic materials to carry the air guiding channel which extends along the axial direction. Furthermore, the air guiding channel may have specific fixing elements for fixing the air guiding channel to the stator segment. In an exemplary embodiment, the stator segment comprises reinforcement plates for stabilizing the structure of the stator. Hence, the air guiding channel and/or the air collecting caps may be additionally mounted to the reinforcement plates in order to provide sufficient stiffness.

According to a further exemplary embodiment, the air guiding channel comprises an axial end being arranged axially outside of the stator segment and further comprises a radial channel element coupled to the axial end for guiding air from a radial inner side to a radial outer side of the stator segment. Hence, it is possible to guide the air out of the stator segment. For example, if the stator is installed in the nacelle of the wind turbine, the radial channel element may end at the housing of the nacelle in order to guide the air to the environment of the wind turbine.

According to a further exemplary embodiment, the stator further comprises a further air collecting cap arranged at a radially inner surface of the stator segment, wherein the further air collecting cap forms a further air collecting volume for collecting air streaming though the cooling openings of the stator segment. The air guiding channel is coupled to the further air collecting cap for guiding air from the further air collecting volume through a further air opening into the air guiding channel. Hence, for example to one common air guiding channel, a plurality of air collecting caps may be coupled. For example, a plurality of air collecting caps are arranged at the inner surface of the stator segment. All air collecting caps may comprise respective air openings to the air guiding channel. The respective air collecting volumes of the air collecting caps may be separated between each other such that no air flows between the air collecting volume and the further air collecting volume.

According to a further exemplary embodiment, wherein the further air collecting cap is arranged adjacent to the air collecting cap along the axial direction. Additionally or alternatively, the further air collecting cap is arranged adjacent to the air collecting cap along a circumferential direction. For example, if the plurality of air collecting caps may be arranged along the circumferential direction to one common stator segment. The air guiding channel may comprise a collecting section extending along a radial direction and being coupled to respective air openings of the air collecting caps. Hence, in the collecting section of the air guiding channel, the respective air can be collected and then further blown through the axially extending main part of the air guiding channel in order to guide the collected air outside of the stator segment.

According to a further exemplary embodiment, the stator further comprises a further stator segment having further cooling openings for guiding air through the further stator segment along a radial direction of the wind turbine generator. The further stator segment is coupled circumferentially adjacent to the stator segment. In other words, the stator of a wind turbine may be made of a plurality of stator segments that are coupled to each other along the circumferential direction. Typically, the stator segments form a closed ring of the stator.

According to a further exemplary embodiment, the air collecting cap is further arranged at a radially inner surface of the further stator segment such that the air collecting cap covers an interface section between the stator segment and the further stator segment. Between the coupled stator segments, the interface section is formed. At the interface section, contact surface and small gaps between the adjacent and abutting stator segments may exist. Hence, respective air also flows through the interface section. According to the present exemplary embodiment, the air collecting cap may cover the inner surface of the stator segment and partially of the further stator segment in order to collect air flowing through at least the air openings of the stator segment and through the interface section between the stator segment and the further stator segment. Hence, leakage of air flowing through the interface section can be collected by the air collecting cap.

In a further exemplary embodiment, the air collecting cap further covers the inner surface of the stator segment and the further stator segment in such a way that the air collecting cap also covers air openings of the stator segment and further air openings of the further stator segment. Hence, the air collecting cap may be used for collecting air from two or more circumferentially adjacent stator segments.

According to a further exemplary embodiment, the stator further comprises a further air collecting cap arranged at a radially inner surface of the further stator segment, wherein the further air collecting cap forms a further air collecting volume for collecting air streaming though the further cooling openings of the further stator segment.

Hence, according to an exemplary embodiment, each stator segment may comprise a respective air collecting caps for collecting the airflow through the respective air openings. In an exemplary embodiment, between two circumferentially adjacent stator segments, an intermediate stator segment may be arranged. The air collecting caps may cover for example the interface sections between the respective stator segment and the intermediate stator segment. For example, the intermediate stator segment will be free of any cooling openings for cooling purposes.

However, the intermediate stator segment may also comprise respective intermediate cooling openings, wherein one section of the intermediate air openings may be covered by the air collecting cap of the stator segment and another section of the intermediate air openings may be covered by the further air collecting cap of the further stator segment.

Furthermore, in a further exemplary embodiment, along the circumferential direction, an air collecting cap of a stator segment covers one intermediate section of an adjacent further stator segment. Hence, regarding a closed stator ring made of stator segments, the intermediate sections are always covered by one air collecting cap.

According to a further exemplary embodiment, the air guiding channel is coupled to the further air collecting cap for guiding air from the further air collecting volume through a further air opening into the air guiding channel. Hence, one common air guiding channel may be used and may be coupled to the respective air collecting caps. The air guiding channel may therefore comprise a collecting section extending along a radial direction and being coupled to respective air openings of the air collecting caps. Hence, in the collecting section of the air guiding channel, the respective air can be collected and then further blown through the axially extending main part of the air guiding channel in order to guide the collected air outside of the stator segment.

According to a further exemplary embodiment, the stator comprises a further air guiding channel wherein the further air guiding channel is coupled to the further air collecting cap for guiding air from the further air collecting volume through a further air opening into the air guiding channel. The further air guiding channel is configured for guiding the collected air outside of the further stator segment.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless indicated otherwise, in addition to any combination of features belonging to one type of subject matter also any combination between features relating to different subject matters, in particular between features of the method type claims and features of the apparatus type claims, is considered disclosed with this document.

The aspects defined above, and further aspects of the present invention are apparent from the examples of embodiments to be described hereinafter and are explained with reference to the examples of embodiments. The invention will be described in more detail hereinafter with reference to examples of embodiments, to which the invention is, however, not limited.

Independent of the grammatical term usage, individuals with male, female or other gender identities are included within the term.

### Brief Description of the Drawings

Fig. 1 shows a schematic view of a wind turbine generator comprising stator segments with respective air collecting caps according to an exemplary embodiment of the present invention.
Fig. 2 shows a schematic view of a wind turbine generator comprising stator segments with respective air collecting caps, wherein one air collecting cap covers an interface section according to an exemplary embodiment of the present invention.
Fig. 3 shows a schematic view of a wind turbine generator comprising stator segments with an intermediate stator section according to an exemplary embodiment of the present invention.
Fig. 4 shows a schematic view of a wind turbine generator comprising stator segments with respective air collecting caps, wherein one air collecting cap covers an interface section to an intermediate stator section according to an exemplary embodiment of the present invention.
Fig. 5 shows a schematic view of a stator comprising stator segment with respective air collecting caps having a radial ventilator according to an exemplary embodiment of the present invention.
Fig. 6 shows a schematic view of a stator comprising stator segment with respective air collecting caps and reinforcement plates according to an exemplary embodiment of the present invention.
Fig. 7 shows a schematic view of a wind turbine generator comprising two air guiding caps arranged axially adjacent to each other and being coupled to one common air guiding channel according to an exemplary embodiment of the present invention.

### Detailed Description

The illustrations in the drawings are schematically. It is noted that in different figures, similar or identical elements are provided with the same reference signs.

The illustration in the drawings is schematic. It is noted that in different figures, similar or identical elements or features are provided with the same reference signs. In order to avoid unnecessary repetitions elements or features, which have already been elucidated with respect to a previously described embodiment are not elucidated again at a later position of the description.

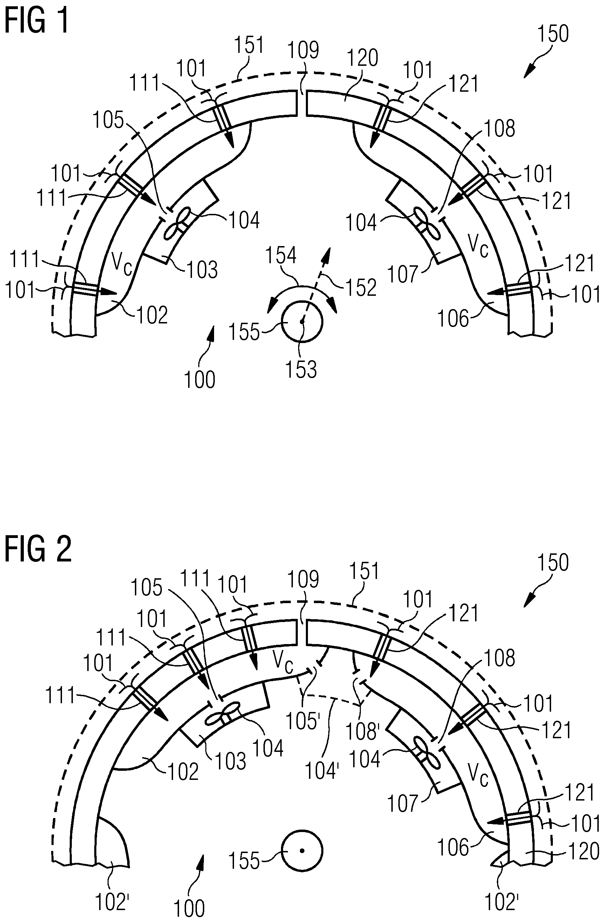

**Fig. 1** shows a schematic view of a wind turbine generator 150 comprising stator segments 110, 120 with respective air collecting caps 102, 106 according to an exemplary embodiment of the present invention.

The stator 100 for a wind turbine generator 150. The stator 100 comprises a stator segment 110 having cooling openings 111 for guiding air 101 through the stator segment 110 along a radial direction 152 of the wind turbine generator 150, and an air collecting cap 102 arranged at a radially inner surface of the stator segment 110, wherein the air collecting cap 102 forms an air collecting volume Vc for collecting air 101 streaming though the cooling openings 111. The stator 100 further comprises an air guiding channel 103, wherein the air guiding channel 103 is coupled to the air collecting cap 102 for guiding air 101 from the air collecting volume Vc through an air opening 105 into the air guiding channel 103. The air guiding channel 103 is configured for guiding the collected air 101 outside of the stator segment 110.

The stator 100 particularly denotes the immovable part of the electric wind turbine generator 150. A stator 100 has an annular or cylindrical structure comprising for example magnetic elements and/or coil elements for generating electricity. The stator 100 comprises of a plurality of stator segments 110, 120 that are arranged with respect to each other along the circumferential direction 154 around the rotating axis defined by the rotating shaft 155 of the rotor 151 (shown with dotted lines). Hence, the axial direction 153 particularly denotes a direction parallel to the direction of the axis of rotation of the rotor 151 and the rotating shaft 155, respectively, of the wind turbine generator 150. The radial direction 152 is orthogonal to the axis of rotation and hence the axial direction 153. The circumferential direction 154 describes the direction around the axis of rotation 153 and is perpendicular to the axial direction 153 and the circumferential direction 154.

The stator segment 110 comprises respective cooling openings 111 for guiding air 101 from one side of the stator segment 110 to the other side. Specifically, cooling air 101 may be guided through a gap between the stator 100 and the rotor 151 for cooling the respective components of the stator 100. The air 101 is then guided out of the gap through the cooling openings 111 on a stator segment 110. The stator segment 110 may comprise a plurality of cooling openings 111 which can be arranged in predefined pattern.

The air collecting cap 102 is mounted to a surface of the stator segment 110, which surface is opposite to the surface facing the rotor 151, e.g. to the radial inner surface of the stator segment 100. The air collecting cap 102 forms a collecting volume Vc between the surface of the stator segment 110 and the air collecting cap 102 itself. The air collecting cap 102 covers a larger inner surface of the stator segment 110 for covering a plurality of cooling openings 111. At the radially spaced bottom surface spaced apart from the inner surface of the stator segment 110, the air opening 105 for providing a fluid connection to the air guiding channel 103 is formed. Hence, air streaming through a plurality of cooling openings 111 is collected in the air collecting volume Vc before flowing out of the air guiding channel 103 via the air guiding channel 103.

The air guiding channel 103 is coupled to the air collecting cap102. The air opening 105 is formed a respective connection between the inner air collecting volume Vc and the air guiding channel 103. The air guiding channel 103 extends specifically at least one direction component along the axial direction 153 in order to guide the air of the stator segment 110. Specifically, a ventilator 104 is installed in the air guiding channel 103 to transport by blowing or sucking the air 101 from the air guiding channel 103 outside of the stator segment 110. Hence, the air 101 streaming though the cooling openings is collected within the collecting volume Vc. Thus, the cooling air 101 does not longer flow unguided within the inner side of the stator 100 but is selectively gathered in the collecting volume Vc.

The air guiding channel 103 is coupled radially inwards to the air collecting cap 102 such that the air opening 105 is configured for guiding air 101 radially from the air collecting volume Vc to the air guiding channel 103. Hence, the air opening 105 for providing a fluid connection to the air guiding channel 103 is formed at the radial inner bottom surface of the air collecting cap 102 spaced apart from the inner surface of the stator segment 110.

The air collecting cap 102 comprises plastic material, in particular fibre reinforced plastic material. Since the air 101 streaming through the cooling openings 111 has a moderate temperature and because the air collecting caps 102 do not transfer any forces of the stator segment 110 regarding stability, the air collecting caps 102 may be formed in a lightweight manner.

The stator 100 further comprises the further stator segment 120 having further cooling openings 121 for guiding air 101 through the further stator segment 120 along the radial direction 152 of the wind turbine generator. The further stator segment 120 is coupled circumferentially adjacent to the stator segment 110. Between the stator segments 110, 120, interface sections 109 exist forming the contact region between the stator segments 110, 120. In other words, the stator 100 of a wind turbine may be made of a plurality of stator segments 110, 120 that are coupled to each other along the circumferential direction 154. Typically, the stator segments 110, 120 form a closed ring of the stator 100.

The stator 100 further comprises a further air collecting cap 106 arranged at a radially inner surface of the further stator segment 120, wherein the further air collecting cap 106 forms a further air collecting volume Vc for collecting air 101 streaming though the further cooling openings 121 of the further stator segment 120.

Hence, according to an exemplary embodiment, each stator segment 110, 120 may comprise a respective air collecting cap 102, 106 for collecting the airflow through the respective cooling openings 111, 121.

A further air guiding channel 107 is coupled to the further air collecting cap 106 for guiding air 101 from the further air collecting volume Vc through a further air opening 108 into the further air guiding channel 107. The further air guiding channel 107 is configured for guiding the collected air 101 outside of the further stator segment 120.

**Fig. 2** shows a schematic view of a wind turbine generator 150 comprising stator segments 110, 120 with respective air collecting caps 102, 106, wherein one air collecting cap 102 covers an interface section 109 according to an exemplary embodiment of the present invention.

The air collecting cap 102 attached to one stator segment 110 is further arranged at a radially inner surface of the further stator segment 120 such that the air collecting cap 102 covers an interface section 106 between the stator segment 110 and the further stator segment 120. At the interface section 109, contact surface and small gaps between the adjacent and abutting stator segments 110, 120 may exist. Hence, respective air 101 also flows through the interface section 109. According to the present exemplary embodiment, the air collecting cap 102 covers the inner surface of the stator segment 110 and partially of the further stator segment 120 in order to collect air 101 flowing through at least the air openings 111 of the stator segment 110 and through the interface section 109 between the stator segment 110 and the further stator segment 120. Hence, leakage of air flowing through the interface section 109 can be collected by the air collecting cap 102. Hence, regarding a closed stator ring made of stator segments 110, 120, the intermediate sections 109 are always covered by one air collecting cap 102, 106.

The air collecting cap 102 may further cover (not shown) the inner surface of the stator segment 110 and the further stator segment 120 in such a way that the air collecting cap 102 also covers air openings 111 of the stator segment 110 and further air openings 121 of the further stator segment 120. Hence, the air collecting cap 102 may be used for collecting air 101 from two or more circumferentially adjacent stator segments 110, 120.

In an exemplary embodiment as outlined with the dotted lines in Fig. 2, the air guiding channel 104' is coupled to the further air collecting cap 106 for guiding air 101 from the further air collecting volume Vc through a further air opening 108' into the air guiding channel 104'. Hence, one common air guiding channel 104' may be coupled to the respective air collecting caps 102, 106. The air guiding channel 104' may therefore comprise a collecting section extending along a radial direction 152 and being coupled to respective air openings 105', 108' of the air collecting caps 102, 106. Hence, in the collecting section of the air guiding channel 104', the respective air can be collected and then further blown through the axially extending main part of the air guiding channel 104' in order to guide the collected air outside of the stator segments 110, 120.

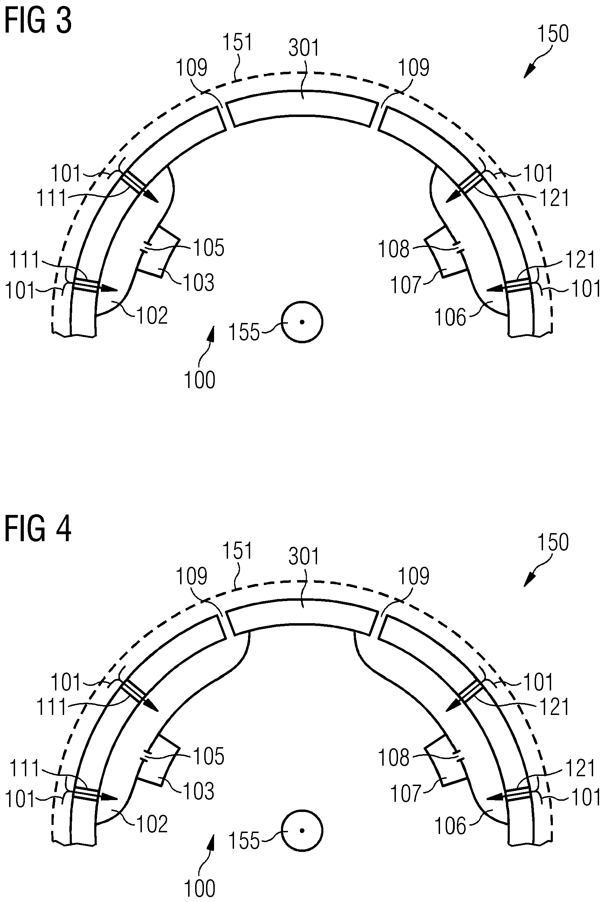

**Fig. 3** shows a schematic view of a wind turbine generator 150 comprising stator segments 110, 120 with an intermediate stator section 301 therebetween according to an exemplary embodiment of the present invention.

**Fig. 4** shows a schematic view of a wind turbine generator comprising stator segments with respective air collecting caps, wherein one air collecting cap 102 covers an interface section 109 to an intermediate stator section 301 according to an exemplary embodiment of the present invention.

The air collecting caps 102, 106 may cover for example the interface section 109 between the respective stator segment 110 and the intermediate stator segment 301 and the interface section 109 between the respective further stator segment 120 and the intermediate stator segment 301. For example, the intermediate stator segment 301 will be free of any cooling openings for cooling purposes. Alternatively, the intermediate stator segment 301 may also comprise respective intermediate cooling openings, wherein one section of the intermediate air openings may be covered by the air collecting cap 102 of the stator segment 110 and another section of the intermediate air openings may be covered by the further air collecting cap 106 of the further stator segment 120.

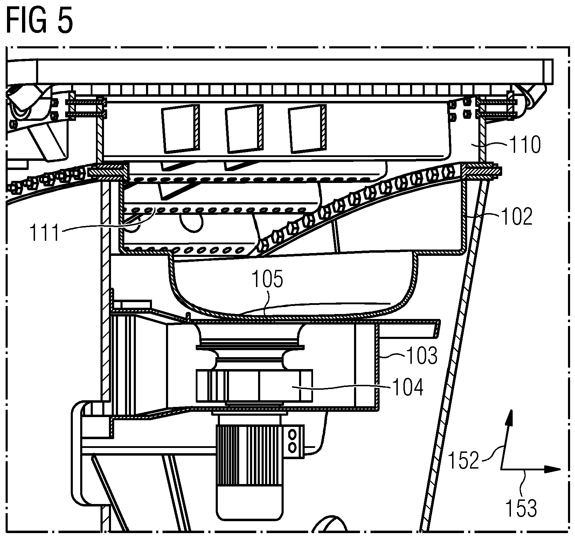

**Fig. 5** shows a schematic view of a stator 100 comprising stator segment with respective air collecting caps 102 having a radial ventilator 104 according to an exemplary embodiment of the present invention. Through a plurality of cooling openings 111 air 101 streams into the air collecting cap 102.

The ventilator 104 is arranged at the air opening 105 inside the air guiding channel 103. Hence, the ventilator 104 sucks specifically the air along a radial direction 152 through the air opening 105 into the air guiding channel 103 and blows the air 101 further along the air guiding channel 103. As can be seen in Fig. 5, the motor of the ventilator 104 may also be fixed to the air guiding channel 103, specifically outside of the air guiding channel 103.

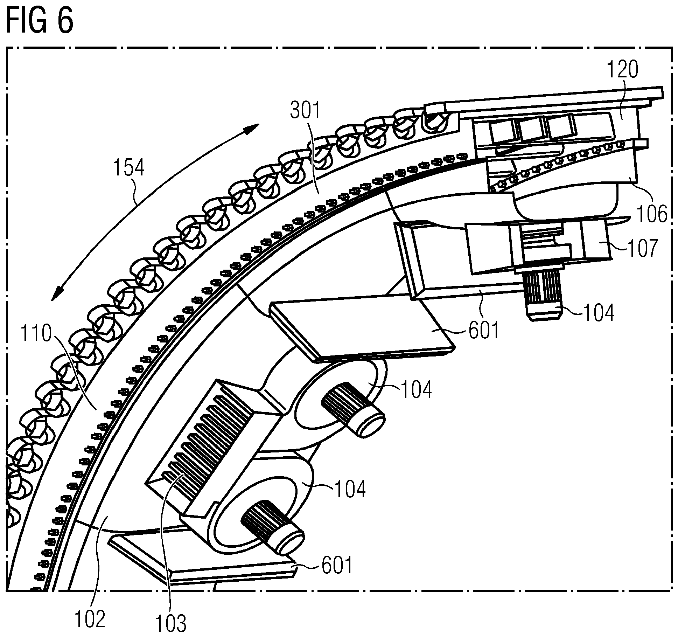

**Fig. 6** shows a schematic view of a stator 100 of a wind turbine generator 150 comprising stator segments 110, 120, 301 with respective air collecting caps 102, 106 similar to the embodiment shown in Fig. 3.

In the stator segment 110, two radial ventilators 104 are coupled to the air guiding channel 103 and are arranged adjacent to each other along the circumferential direction 154.

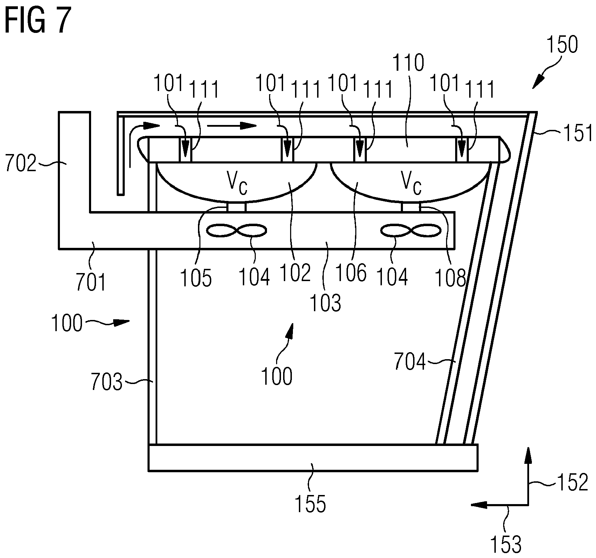

Additionally, reinforcement plates 601 are shown. The reinforcement plates 601 are coupled to the stator segments 110, 120, 301 and extend along the axial direction 153. The reinforcement plates 601 are arranged between and fixed to respective first end plate 703 and the second end plate 704 of a stator 100 (shown in Fig. 7). The reinforcement plates 601 are configured for coupling the first end plate 703 and the second end plate 704 which are spaced apart along the axial direction 153 such that a force is transmissible between the first end plate 702 and the second end plate 703. The air guiding channels 103, 107 and the respective air collecting cap 102, 106 are arranged between two circumferentially arranged reinforcement plates 601. For example, also the air guiding channel 103, 107 and/or the air collecting caps 102, 106 may be additionally mounted to the reinforcement plates 601 in order to provide sufficient stiffness.

**Fig. 7** shows a schematic view of a wind turbine generator 150 having an outer rotor 151 rotating with the rotating shaft 155 and an inner stator 100. At axial ends of the stator the respective end plates703, 704 are arranged. Two air guiding caps 102, 106 are arranged axially adjacent to each other and being coupled to one common air guiding channel 103.

As shown in Fig. 7, the stator 100 further comprises a further air collecting cap 102 arranged at a radially inner surface of the stator segment 110, wherein the further air collecting cap 106 forms a further air collecting volume Vc for collecting air 101 streaming though the cooling openings 111 of the stator segment 110. The air guiding channel 103 is coupled to the air collecting caps 103, 107 for guiding air 101 from the air collecting volumes Vc through air openings 105, 108 into the air guiding channel. Hence, for example to one common air guiding channel 103, a plurality of air collecting caps 102, 106 may be coupled. For example, a plurality of air collecting caps 102, 106 are arranged at the inner surface of the stator segment e.g. in axial direction 153.

The air guiding channel 103 comprises an axial end 701 being arranged axially outside of the stator segment 110 and further comprises a radial channel element 702 coupled to the axial end 701 for guiding air 101 from a radial inner side to a radial outer side of the stator segment 110. For example, if the stator is installed in the nacelle of the wind turbine, the radial channel element 702 may end at the housing of the nacelle in order to guide the air 101 to the environment of the wind turbine.

Furthermore, below a respective air opening 105, 108 of the respective air collecting caps 102, 106, a respective ventilator 104 may be installed. The ventilators 104 are arranged inside the air guiding channel 103. Hence, inside the air guiding channel 102 a plurality of ventilators 104 may be arranged one after another along the axial direction.

It should be noted that the term "comprising" does not exclude other elements or steps and the use of articles "a" or "an" does not exclude a plurality. Also, elements described in association with different embodiments may be combined. It should also be noted that reference signs in the claims should not be construed as limiting the scope of the claims.

## Claims

1. Stator (100) for a wind turbine generator (150), the stator (100) comprising
a stator segment (110) having cooling openings (111) for guiding air (101) through the stator segment (110) along a radial direction (152) of the wind turbine generator (150),
an air collecting cap (102) arranged at a radially inner surface of the stator segment (110),
wherein the air collecting cap (102) forms an air collecting volume (Vc) for collecting air (101) streaming though the cooling openings (111),
an air guiding channel (103),
wherein the air guiding channel (103) is coupled to the air collecting cap (102) for guiding air (101) from the air collecting volume (Vc) through an air opening (105) into the air guiding channel (103),
wherein the air guiding channel (103) is configured for guiding the collected air (101) outside of the stator segment (110) .

2. Stator (100) according to claim 1, further comprising a ventilator (104) arranged in the air guiding channel (103) for guiding the collected air (101) outside of the stator (100).

3. Stator (100) according to claim 2,
wherein the ventilator (104) is arranged at the air opening (105) inside the air guiding channel (103),
wherein the ventilator (104) is in particular a radial ventilator (104).

4. Stator (100) according to one of the claims 1 to 3, wherein the air guiding channel (103) is coupled radially inwards to the air collecting cap (102) such that the air opening (105) is configured for guiding air (101) radially from the air collecting volume (Vc) to the air guiding channel (103) .

5. Stator (100) according to one of the claims 1 to 4, wherein the air collecting cap (102) comprises plastic material, in particular fibre reinforced plastic material.

6. Stator (100) according to one of the claims 1 to 5, wherein the air guiding channel (103) comprises an axial end (701) being arranged axially outside of the stator segment (110) and further comprises a radial channel element (702) coupled to the axial end (701) for guiding air (101) from a radial inner side to a radial outer side of the stator segment (110).

7. Stator (100) according to one of the claims 1 to 6, further comprising
a further air collecting cap (106) arranged at a radially inner surface of the stator segment (110),
wherein the further air collecting cap (106) forms a further air collecting volume (Vc) for collecting air (101) streaming though the cooling openings (111) of the stator segment (110),
wherein the air guiding channel (103) is coupled to the further air collecting cap (106) for guiding air (101) from the further air collecting volume (Vc) through a further air opening (108) into the air guiding channel (103).

8. Stator (100) according to claim 7,
wherein the further air collecting cap (106) is arranged adjacent to the air collecting cap (102) along the axial direction (153), or
wherein the further air collecting cap (106) is arranged adjacent to the air collecting cap (102) along a circumferential direction (154).

9. Stator (100) according to one of the claims 1 to 6, further comprising
a further stator segment (120) having further cooling openings (121) for guiding air (101) through the further stator segment (120) along a radial direction (152) of the wind turbine generator (150),
wherein the further stator segment (120) is coupled circumferentially adjacent to the stator segment (110).

10. Stator (100) according to claim 9,
wherein the air collecting cap (102) is further arranged at a radially inner surface of the further stator segment (120) such that the air collecting cap (102) covers an interface section (109) between the stator segment (110) and the further stator segment (120).

11. Stator (100) according to claim 9 or 10, further comprising
a further air collecting cap (106) arranged at a radially inner surface of the further stator segment (120), wherein the further air collecting cap (106) forms a further air collecting volume (Vc) for collecting air (101) streaming though the further cooling openings (121) of the further stator segment (120).

12. Stator (100) according to claim 11,
wherein the air guiding channel (103) is coupled to the further air collecting cap (106) for guiding air (101) from the further air collecting volume (Vc) through a further air opening (108) into the air guiding channel (103).

13. Stator (100) according to claim 11, further comprising
a further air guiding channel (107),
wherein the further air guiding channel (107) is coupled to the further air collecting cap (106) for guiding air (101) from the further air collecting volume (Vc) through a further air opening (108) into the air guiding channel (103), wherein the further air guiding channel (107) is configured for guiding the collected air (101) outside of the further stator segment (120).

14. Wind turbine generator (150), comprising
a stator (100) according to one of the claims 1 to 13, and
a rotor (151) being rotatable with respect to the stator (100),
wherein between the stator (100) and the rotor (151) air (101) is injectable,
wherein the air is guidable through the cooling openings (111) of the stator segment (110) through the stator segment (110) along a radial direction (152).

15. Method for manufacturing a stator (100) for a wind turbine generator (150), the method comprising
providing a stator segment (110) having cooling openings (111) for guiding air (101) through the stator segment (110) along a radial direction (152) of the wind turbine generator (150),
arranging an air collecting cap (102) at a radially inner surface of the stator segment (110),
wherein the air collecting cap (102) forms an air collecting volume (Vc) for collecting air (101) streaming though the cooling openings (111),
coupling an air guiding channel (103) to the air collecting cap (102) for guiding air (101) from the air collecting volume (Vc) through an air opening (105) into the air guiding channel (103),
wherein the air guiding channel (103) is configured for guiding the collected air (101) outside of the stator segment (110) .
